# EUROPEAN PATENT SPECIFICATION

(11) **EP 2 883 757 B1**
(45) Date of publication and mention of the grant of the patent: **16.05.2018**
(21) Application number: 13196959.4
(22) Date of filing: 12.12.2013
(51) Int. Cl.: B60R 21/0134

(54) **Method for setting a collision protection system of a vehicle**
Verfahren zur Einstellung eines Aufprallschutzsystems eines Fahrzeugs
Procédé de réglage d'un système de protection de collision d'un véhicule

(43) Date of publication of application: 17.06.2015
(73) Proprietor: Volvo Car Corporation, 40531 Göteborg (SE)
(72) Inventor: Nilsson, Pär, 431 59 Mölndal (SE); Nordin, Erik, 42349 Torslanda (SE); Sandblom, Fredrik, 47493 Ellös (SE); Almevad, Anders, 44374 Sjövik (SE)
(74) Representative: Volvo Car Corporation

(56) References cited:
- WO-A1-2009/141092
- DE-A1-102011 118 149
- FR-A1- 2 889 882
- US-A1- 2006 195 231
- US-A1- 2010 063 676

## Description

### TECHNICAL FIELD

The present disclosure relates to a method for setting a collision protection system of a vehicle. The disclosure further relates to the collision protection system and a vehicle comprising the collision protection system.

### BACKGROUND

A modern vehicle may be equipped with different protection means for mitigating the consequences of a collision. The protection means may be preventive, i.e. intended to be activated before the collision, and/or they may be protective, i.e. intended to be activated during the collision. The protection means may be external to the vehicle, e.g. being activated on the outside of the vehicle in case of a collision with a vulnerable road user in order to protect the vulnerable road user, such as a pedestrian airbag or a deployable bonnet. The protection means may be internal, i.e. used within the vehicle, e.g. intended to protect a user of the vehicle, such as a driver or a passenger.

The protection means may further be characterized as reversible or irreversible. If reversible, the protection means may be used again. If irreversible, the protection means is to be reset or replaced to be ready for use again. This may lead to costly repairs and/or vehicle user dissatisfaction. Further, there may be a maximum number of activations for a reversible protection means and/or it may cost some time and effort to reset it. There is therefore a desire to avoid activating a protection means, if it will not help to mitigate the consequence of the collision.

As mentioned above, a modern vehicle may be equipped with a vulnerable road user protection means, such as a deployable bonnet, one or more airbags covering the windscreen and/or the A-pillars of the vehicle, an active bumper and/or a bumper airbag. Such protection means are intended to mitigate the consequences for a vulnerable road user, e.g. a pedestrian or a cyclist, if a collision with the vehicle occurs. A collision between the vulnerable road user and the vehicle may be detected by a contact-based sensor and the vulnerable road user protection means may be activated based on the detected contact. Some of the protection means are irreversible, e.g. a pyrotechnical bonnet lifter or an inflatable airbag, and thus need to be replaced after use. As mentioned above, there is a desire to avoid activating a vulnerable road user protection means, if it will not help to mitigate the consequence of the collision.

US Patent Application No US 2010/0063676 A1 discloses a person detection apparatus, which controls activation of a crash absorption device such as an external airbag of a vehicle. When the vehicle is about to collide with a detected object, a judgment is made as to whether the object is a person. If the object is judged to be other than a person, activation of the crash absorption device is inhibited. It is rendered easier or more difficult for an object to be judged as being a person, in accordance with whether or not the vehicle is operating in an environment with a relatively high probability that persons will be present. Environment information may be acquired from a vehicle navigation apparatus and includes information if the road is used both for vehicles and persons, or vehicles only, and/or if the vehicle is running on a part of a road, which has a history of a large number of accidents.

The document US 2010/0063676 A1 thus refers to historical data and/or to information stored in the vehicle navigation apparatus, which information of its inherent nature also is historical. However, it may also be interesting to consider the present traffic situation. There is thus a desire for an improved collision protection system and, in particular, for a system for protection of a vulnerable road user.

German Patent Application No DE 10 2011 118 149 A1 discloses a method for operating a safety system in a motor vehicle. The method includes ascertaining at least one parameter characterizing a traffic situation of the motor vehicle and classifying a momentary traffic situation of the motor vehicle based on the at least one ascertained parameter. The method includes ascertaining a probability of an occurrence of at least one accident type from a plurality of predefined accident types in the classified momentary traffic situation, and if the ascertained probability exceeds a predefined threshold value, adapting a triggering threshold for actuating at least one passenger protection device of the motor vehicle. In particular it is disclosed that if a traffic sign recognition system detects a zebra crossing, and/or digital map data provides to the passive safety system the information that the vehicle is in a town, the parameters for a pedestrian protection system could be calibrated for an earlier activation time.

### SUMMARY

The object of the present disclosure is to overcome or ameliorate at least one of the disadvantages of the prior art, or to provide a useful alternative.

The object above may be achieved by the method according to claim 1.

The term setting a collision protection system includes making settings, adjustments and selections utilized in the system.

The collision protection system may be preventive and/or protective, as explained above. It is desirable to provide a system being adapted to activate a protection means, if it will help, and not activating it, if it will not help to mitigate the consequence of the collision.

The term road information object comprises a traffic sign, a road marking and/or a traffic light. Examples of traffic signs, which could influence the living being probability, are a pedestrian crossing sign, a pedestrian warning sign, a school sign, a cyclist warning sign, a road bump sign, a bus stop sign, a sign for a pedestrian zone, a parking sign, a roadwork sign and a speed sign showing reduced speed. Examples of road markings, which could influence the living being probability, are zebra stripes, a painted cycle way or a parking. Example of a traffic light, which could influence the living being probability, is a traffic light intended for pedestrians or cyclists or a general traffic light. Another example of a road information object is a speed limitation object, i.e. an object used to keep the speed of vehicles low, such as a flowerbox placed in a street or, a narrowing of a street.

The term determining a road information object comprises determining a presence of the road information object. The road information object may be determined by being detected by a sensor of the vehicle, e.g. a remote sensor of the vehicle. As an alternative, or a complement, the road information object may be determined by means of information about the road information object being sent to the vehicle e.g. by an infrastructure-2-vehicle system or sent by the road information object itself.

The region in front of the vehicle may be preselected or may be selectable by the user or by a control system of the vehicle. The size and/or shape of the region may be selected considering factors such as a speed of the vehicle hosting the collision protection system, capability of the vehicle, e.g. braking distance, weather conditions, such as fog, mist, rain or snow, road conditions, such as wet or icy, and light conditions, such as day or night.

Further the term "in front of" is related to a moving direction of the vehicle. Thus if the vehicle moves in its normal driving direction, the region in front of the vehicle is located geometrically in front of the vehicle. However, if reversing the vehicle, i.e. going backwards, the region in front of the vehicle in relation to its moving direction will refer to a region located geometrically behind the vehicle. Moreover, if the vehicle turns, the region in front of the vehicle may relate to a region being, at least partly, to the left, or to the right of the vehicle.

The living being is a person, such as a pedestrian or a cyclist. A large animal is a moose, a deer, a reindeer, a wild boar or a horse. A large animal has a height at least as high as the bonnet.
The living being probability relates to the probability of that a living being is present on the road in front of the vehicle.
Purely as an example, assume that the determined road information object is a pedestrian crossing sign. Then there is a higher probability that a pedestrian is present on the road in an area of the road comprising the pedestrian crossing, as compared to other areas of that road, e.g. before or after the pedestrian crossing. The higher probability may then be used to adjust the fire interval of the evaluation algorithm. For example, a contact-based sensor may be made more sensitive.
The evaluation algorithm is used for deciding whether or not to activate the protection means. The fire interval being used at a certain moment thus depends on the determined road information object. If no road information object has been found, or, if it is determined that the detected road information object will not influence the living being probability, a default value may be used for the living being probability. The fire interval thus changes when the vehicle moves and different road information objects, or absence of a road information object, are detected. The use of a selectable fire interval enables to only activate a protection means, in case it will actually be helpful, and not to activate it if it will not help to mitigate the consequence of the collision.
The fire interval is defined by a lower fire threshold and an upper fire threshold, such that the protection means is activated if the signal is within the fire interval. The selection of the selectable fire interval is thus done by setting the end points of the fire interval, i.e. the lower and upper fire threshold. The fire interval may comprise a lower fire threshold only, such that the protection means is activated, if the result of the evaluation algorithm exceeds that lower fire threshold. The fire interval may comprise an upper fire threshold only, such that the protection means is activated, if the result of the evaluation algorithm underpasses that upper fire threshold. The size of the fire interval may be steplessly selectable, or its size may be selectable in a number of steps. Preferably at least two different sizes of fire interval are utilized, corresponding to the default value of the living being probability, and at least one other value, corresponding to the higher living being probability.
Normally, the fire interval is increased, when the living being probability is high, such that the protection means is more easily activated, since there is then less risk of activating a collision protection means not helping to mitigate the consequence of the collision. This may correspond to making a sensor more sensitive.
Normally, a sensor, e.g. a contact-based sensor is used for activating the protection means. If more than one sensor is used, and especially if they are of different kinds, there may be different fire intervals for the different sensors, which are adjusted individually for each sensor. The individual fire interval may for example be selected dependent on how expensive and/or difficult it would be to repair/replace that protection means, while considering if the protection means would contribute to an adequate protection. Further, dependent on the information from the road information object, some protection means may be deemed more efficient than others for the kind of living being, which the road information object indicates, such that they are activated before other protection means being deemed less efficient in that situation. It may also be appropriate to not activate some protection means, e.g. if the road information object indicates a high probability for a moose, there may be a desire not to use a pedestrian airbag, while there may be a desire to use an internal protection means for protecting a vehicle user.

In particular, the method is used for setting a collision protection system, wherein the living being is a vulnerable road user, the living being probability is a person probability and the protection means is a vulnerable road user protection means.

In that case the method comprises a method for setting a system for protection of a vulnerable road user, the method comprising:
a) determining a road information object in a selectable region in front of a vehicle,
b) determining a person probability based on the road information object,
c) adjusting a selectable fire interval of an evaluation algorithm of the system utilizing the determined person probability, the fire interval being used for activating a vulnerable road user protection means of the vehicle.

The person probability relates to the probability of that a person is present in the selectable region on the road in front of the vehicle, i.e. a vulnerable road user, such as a pedestrian or a cyclist. Examples of vulnerable road user protection means are a deployable bonnet, one or more airbags covering the windscreen and/or the A-pillars of the vehicle, an active bumper and/or a bumper airbag.

The method may comprise that step a) is performed by scanning the region in front of the vehicle by means of a remote sensor of the vehicle in order to detect the road information object. If it is dark, the remote sensor may cooperate with the headlights of the vehicle.

The remote sensor may comprise a camera system or a stereo camera system. It may utilize visible or non-visible wavelengths of the electromagnetic spectrum. The number of remote sensors may be one, two, three etc. They may for example be located at the front of the vehicle, at the windscreen or at the rear view mirror.

In addition, there may be a remote sensor at the rear of the vehicle being able to scan the region behind the vehicle. This would be useful when reversing the vehicle, since the selectable region being in front of the vehicle with relation to its moving direction, in that case would be geometrically behind the rear of the vehicle.

In addition, a remote sensor, being the camera system or a separate remote sensor, possibly of another kind, may be used to determine the distance to the road information object or its location. Suitable remote sensors for determining distance are e.g. a radar system, a lidar system or an ultrasonic system. By using two sensors, e.g. a stereo camera, the location of the road information object may be determined.

The size of the region to be scanned in front of the vehicle may depend on the sensor, but may typically be up to +/- 90° as seen in a horizontal plane and up to about 100 or 150 metres. Further, the size may depend on the speed of the vehicle. The higher the speed of the vehicle is, the larger region in front of the vehicle is interesting to scan. However, even if the sensor only is able to scan the last metres in front of the vehicle, the input from the remote sensor may anyway be used in a meaningful way.

If more than one road information object is determined in the region in front of the vehicle, data about what the road information object indicates may be coupled to data about the location of the road information object, e.g. the distance to it.

Step a) and/or step b) as described above may be performed by utilizing image analysis for determining presence of the road information object and/or determining information indicated by the road information object. Such image analysis methods are known to the skilled person and will not be further described herein. The image analysis be used to find out what the road signs indicate, e.g. to recognize that it is a warning sign and/or that the sign depicts a pedestrian, a moose, a deer, a reindeer, a wild boar or a horse.

In addition, step a) and/or b) may be performed by utilizing an infrastructure-2-vehicle system for sending information about the road information object to the vehicle. The system may e.g. send information about the location of different road information objects. The vehicle may e.g. use a GPS system to establish its own position and relate it to data about the location of different road information objects.

The living being probability, or person probability, may be confirmed by utilizing additional information available in the vehicle, such as a digital map. The digital map may be stored in an infotainment system of the vehicle, stored in a portable memory or be transmitted to the vehicle.

The method may further comprise
- determining a window being defined by a time and/or a distance from a location of the determined road information object;
- utilizing the adjusted selectable fire interval within the window.

When the vehicle is outside of the window a default value of the living being probability may be used. The fire interval thus changes when the vehicle is in the window. Knowing that the living being probability, or the person probability, is temporarily higher, makes it possible to select the fire interval accordingly, such that the sensitivity for the sensor activating the protection means is adjusted to be more sensitive and hence improving the chance to correctly activate the protections means in case of an impact with e.g. a vulnerable road user.

A size of the window may be selected dependent on information derived from the road information object. It is for example known that a pedestrian crossing is a few metres wide and a school yard may be about 100 metres. The road information object further includes information about within which distance the road information object is valid, e.g. a supplementary sign giving an interval in metres. Such information may be determined by image analysis.
A level of the living being probability, or person probability, may be set dependent on information derived from the road information object. The level may be chosen between 0% and 100%, where 0% means that there is no probability of a person being on the road and 100% means that there is certainty that there is a person on the road. For example, a supplementary sign may give information about time, e.g. that a school sign is valid from 7 am to 6 pm. Then the fire interval may only be adjusted during the time interval, when there are actually children in the school, and hence a higher probability of persons on the road outside the school, than during late evening or night.
The method may further comprise:
- determining a speed of an object moving in the selectable region in front of the vehicle,
- determining that the speed is in a speed range typical of a living being,
- adjusting the living being probability based on the determined speed.
As mentioned above, the living being may be a vulnerable road user, the living being probability may be a person probability and the protection means may be a vulnerable road user protection means. The method then may comprise
- determining a speed of an object moving in the selectable region in front of the vehicle,
- determining that the speed is in a speed range typical of a vulnerable road user,
- adjusting the person probability based on the determined speed.
The speed of the object relative to the vehicle may be determined by the remote sensor. It is for example known that a pedestrian or a cyclist normally moves slower than another vehicle. On the other hand, objects such as a dust bin or a traffic sign normally stands still. If knowing the speed and direction of the own vehicle, the absolute speed and direction of the target object may be determined.

The method may further comprise:
- detecting an impact or an imminent impact with an object by a sensor of the vehicle,
- the sensor sending information about the impact as a signal to the evaluation algorithm,
- the evaluation algorithm evaluating if the signal is within the selectable fire interval, and in that case activating the protection means of the vehicle.

The sensor may be contact-based or remote. The contact-based sensor may comprise an accelerometer, a pressure sensor, a light sensor, a fibre-optic sensor, a contact foil and/or a piezoelectric sensor. Normally, there is a plurality of contact-based sensors at different locations in the vehicle. The number of contact-based sensors may be one, two, three etc. They may be of different kinds. Examples of remote sensors have been given above. A remote sensor may be combined with a contact-based sensor.

In case an object is detected by the sensor without any previous determination of a road information object, the above-mentioned default value of the living being probability may be used.

The method further comprises the step of determining a speed of the vehicle, when the road information object is determined, and adjusting the fire interval if the speed of the vehicle is within a predefined speed interval, the predefined speed interval for example being between 0 and 70 km/h, preferably between 0 and 60 km/h, more preferably being between 10 and 60 km/h, and most preferably being between 20 and 50 km/h. If more than one sensor is used, and especially if they are of different kinds, there may be different fire intervals for the different sensors, which are adjusted individually for each sensor such that they are utilized in different speed intervals.

If using a lower speed limit of the predefined speed interval other than 0 km/h, such as 20 km/h, below which the vulnerable road user protection means is not activated, the lower speed limit may be selected such that below that speed, the vulnerable road user would normally not risk any severe injuries, e.g. because of the low speed and/or because of other protection means of the vehicle. In such a case, it could be an advantageous not to activate a protection means, since the protection means would have to be replaced or repaired after activation, e.g. at a workshop, and the protection means anyway would not have contributed to an adequate protection.

The upper speed limit may be selected according to the type of protection means.

In a second aspect of the present invention, there is provided a system for protection of a vulnerable road user according to claim 10. One or more of the first determination unit, the second determination unit and the processor may form a common physical unit, but may also form separate units, or pairwise form a common physical unit. The whole system may form one physical unit.

As mentioned above, the living being is a vulnerable road user, the living being probability is a person probability, and the protection means is a vulnerable road user protection means. The collision protection system is then a system for protection of a vulnerable road user.
The collision protection system may further comprise a sensor for detecting an impact or an imminent impact with an object. The sensor is arranged to send information as a signal to the evaluation algorithm, and the protection means is adapted to be activated, if the signal is evaluated as being within the selectable fire interval. Examples of sensors are given above.
The first determination unit may comprise a remote sensor for detecting the road information object and/or a communication unit for communication with another vehicle and or a traffic infrastructure unit, e.g. being part of an infrastructure-2-vehicle system.
The first and/or second determination unit may comprise an image analysis system. The image analysis system may be used for determining presence of the road information object and/or determining information indicated by the road information object. Such image analysis systems are known to the skilled person and will not be further described herein.

The collision protection system may further comprise a speed unit for determining the speed of an object moving in the selectable region in front of the vehicle and/or the speed of the vehicle.

The collision protection system may further comprise a protection means, e.g. a vulnerable road user protection means, such as a deployable bonnet, one or more airbags covering the windscreen and/or the A-pillars of the vehicle, an active bumper and/or a bumper airbag.

The collision protection system may further comprise a memory for storing information, such as a digital map, wherein the information comprises data about an road information object, e.g. location and/or type.

In a third aspect of the present invention, there is provided a vehicle comprising a collision protection system like the one described above, e.g. a system for protection of a vulnerable road user.

### BRIEF DESCRIPTION OF THE DRAWINGS

The present invention will hereinafter be further explained by means of non-limiting examples with reference to the appended drawings wherein:
- Figure 1: illustrates a vehicle comprising a collision protection system according to the invention when detecting a road information object,
- Figure 2: illustrates the collision protection system of Figure 1,
- Figure 3: illustrates the vehicle of Figure 1 with activated protection means, and
- Figure 4: is a flowchart of a method according to the invention.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims.

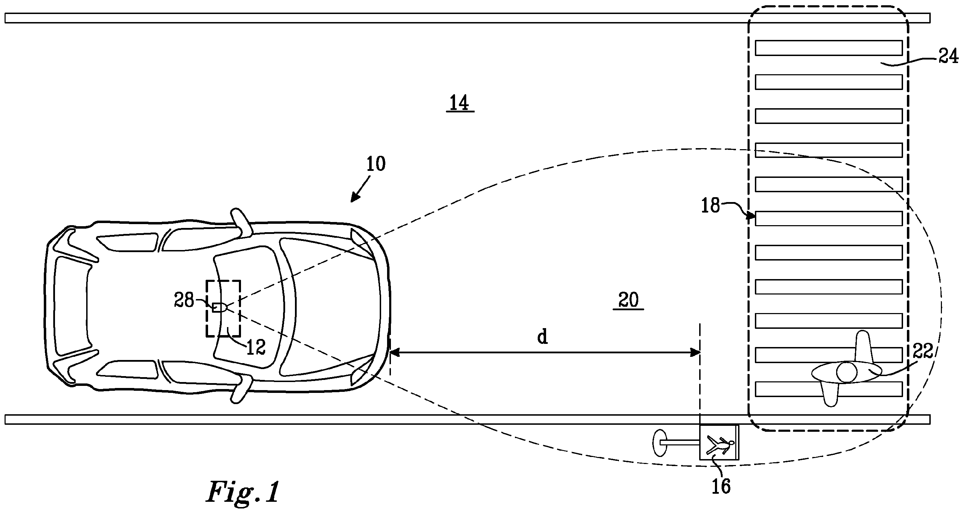

Figure 1 schematically illustrates a vehicle 10 comprising a collision protection system 12 according to the invention, in the illustrated embodiment a system for protection of a vulnerable road user. The vehicle 10 travels on a road 14. The system 12 is adapted to determine if there is a road information object 16, 18 present in a selectable region 20 in front of the vehicle 10. Purely as an example, the road information object may be a traffic sign 16 indicating a pedestrian crossing and/or a road marking 18, here zebra stripes of the pedestrian crossing. Based on the road information object 16, 18 a living being probability is determined, in the illustrated embodiment a person probability, i.e. a probability that a vulnerable road user is present. The vulnerable road user could be a pedestrian 22 crossing the road 14 in front of the vehicle 10. The road information object 16, 18 may also be used to determine a window 24, in which the person probability is higher, e.g. at the pedestrian crossing.

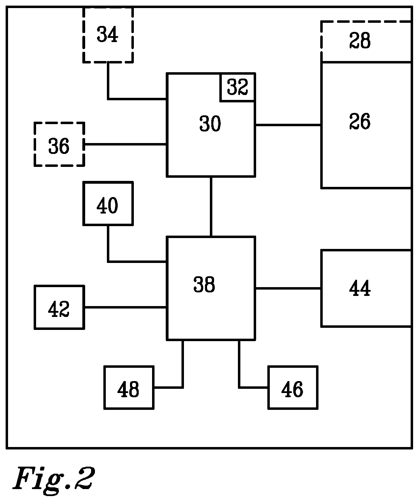

Figure 2 schematically illustrates various components of the system 12.

The system 12 comprises a first determination unit 26 for determining if there is a road information object 16, 18 present in the region 20 in front of the vehicle 10. The first determination unit 26 optionally comprises at least one remote sensor 28 adapted for detecting the road information object 16, 18. The remote sensor 28 may comprise a camera system or a stereo camera system.
The system 12 further comprises a second determination unit 30 for determining the living being probability, in the illustrated embodiment the person probability. The second determination unit 30 may e.g. comprise an image analysis system 32 being able to analyse an image detected by the remote sensor 28 of the first determination unit 26.

As an alternative to the at least one remote sensor 28, or as a complement, the first determination unit 26 may comprise at least one communication unit 34 for communication with another vehicle and or a traffic infrastructure unit, which is remotely located.

The system 12 optionally comprises a memory 36 with stored information, such as a digital map.

The system 12 further comprises a processor 38 comprising an evaluation algorithm for activation of one or more protection means, in the illustrated embodiment a vulnerable road user protection means, such as a deployable bonnet 40 and/or one or more airbags 42 covering the windscreen and/or the A-pillars of the vehicle 10.

The first determination unit 26, the second determination unit 30 and the processor 38 may form a common physical unit, but may also form separate units, as is illustrated in Figure 2.

The system 12 optionally comprises at least one contact-based sensor 44, such as an accelerometer, a pressure sensor, a light sensor, a fibre-optic sensor, a contact foil and/or a piezoelectric sensor. The contact-based sensor 44 is adapted to detect an object being in contact with and/or in a close proximity of the contact-based sensor 44. Normally, there is a plurality of contact-based sensors at different locations in the vehicle 10, even if only one is shown in Figure 2.

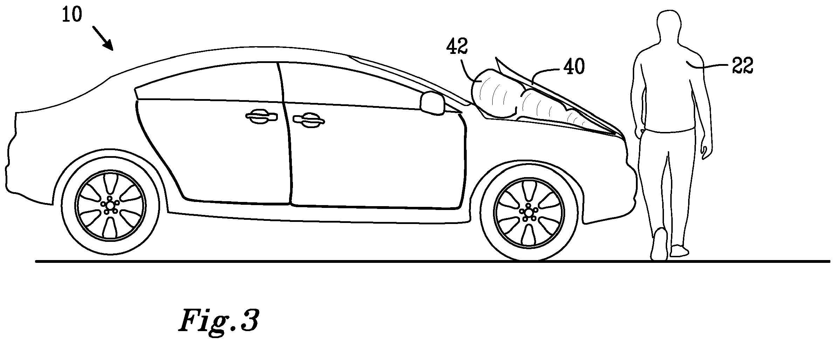

The contact-based sensor 44 is arranged to send information as a signal to the evaluation algorithm. The evaluation algorithm may consider the information as a raw data, e.g. measured acceleration, an integral of the raw data, e.g. speed, and/or as a double integral of the raw data, e.g. distance. The evaluation algorithm has a selectable fire interval, which fire interval is selectable based on the determined person probability. If the signal is within the fire interval, the vulnerable road user protection means 40, 42 will be activated. See Figure 3. Thereby the consequences of the collision for the vulnerable road user 22 are mitigated.

If the selectable fire interval comprises a lower threshold, which is to be exceeded in order to activate the protection means 40, 42, the threshold would be lowered if determining that the vehicle 10 is in the window 24 having a high probability that a vulnerable road user 22 is present. Similarly, if the selectable fire interval comprises an upper threshold, which is to be underpassed in order to activate the protection means 40, 42, the threshold would be raised if determining that the vehicle 10 is in the window 24 having a high probability that a vulnerable road user 22 is present. The selectable fire interval may also comprise a range for which the end points may be changed, the size of the range in that case being increased, if determining that the vehicle 10 is in the window 24 having a high probability that a vulnerable road user 22 is present.

In the illustrated embodiment, the system additionally comprises means 46 to determine the speed of the vulnerable road user, e.g. the pedestrian 22 in Figure 1, e.g. in relation to the vehicle 10. The means 46 may utilize the remote sensor 28 of the first determination unit 26 or be a separate additional remote sensor, such as a radar system, a lidar system, an ultrasonic system, a camera system, a stereo camera system, an IR camera system. The speed information may be used as complementary information, when selecting the selectable fire interval. It is for example known that a pedestrian or a cyclist normally moves slower than another vehicle. On the other hand, objects such as a dust bin or a traffic sign normally stands still. The probability of the object being a vulnerable road user may thus be estimated from its speed.

The vehicle 10 may also comprise means 48 for determining the speed of the vehicle 10 itself. The system 12 may be configured such that the protection means 40, 42 are only activated if the vehicle 10 has a speed at predicted impact with the vulnerable road user 22 being in a predefined speed interval, for example being between 0 and 70 km/h, preferably between 0 and 60 km/h, more preferably being between 10 and 60 km/h, and most preferably being between 20 and 50 km/h.

If using a lower speed limit of the predefined speed interval other than 0 km/h, such as 20 km/h, below which the protection means 40, 42 is not activated, the lower speed limit may be selected such that below that speed, the vulnerable road user 22 would normally not risk any severe injuries, e.g. because of the low speed and/or because of other protection means of the vehicle 10. In such a case, it would be an advantage not to activate a vulnerable road user protection means, such as a pyrotechnical bonnet lifter of a deployable bonnet 40 or an airbag 42 covering the windscreen, since these protection means 40, 42 would have to be replaced after activation, e.g. at a workshop.

The information from the remote sensor 28, and/or the means 46 to determine the speed of the vulnerable road user 22, may be used to determine an impact point on the vehicle 10. The determined impact point may be used for selection of a subset of contact-based sensors from the plurality of contact-based sensors comprised in different locations in the vehicle. Information from contact-based sensors not belonging to the subset may be treated with less weight. The choice of which protection means to activate may be selected based on the information about the impact point.

Under normal operation of the system 12, the selectable region 20 in front of the vehicle 10 is continuously or intermittently scanned by means of the at least one remote sensor 28 in order to detect a possible road information object 16, 18. Further, the optional at least one contact-based sensor 44 is operable, such that it is able to detect if an impact occurs. The optional remote sensor 28 and optional additional remote sensor 46 may work independently of the contact-based sensor/s 44.

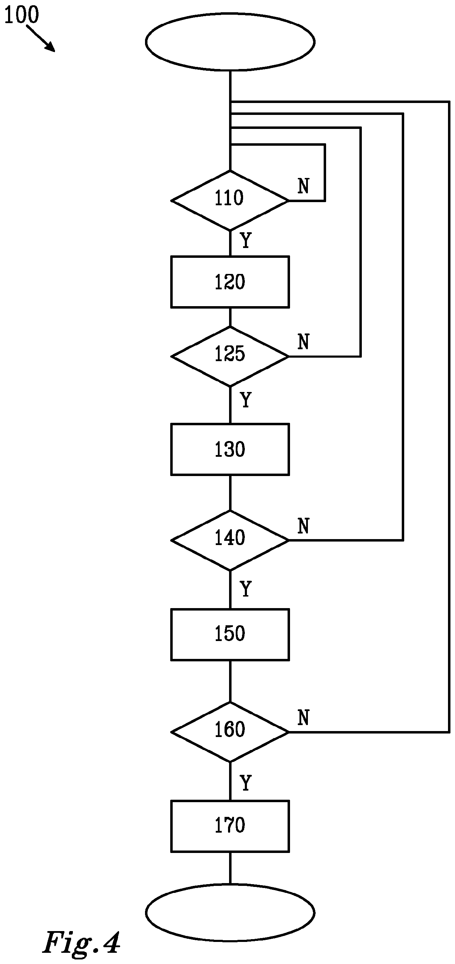

Figure 4 is a flow chart of a method 100 according to the invention.

In a first step 110, it is determined if there is a road information object 16, 18 present in the selectable region 20 in front of a vehicle 10.

If a road information object 16, 18 is present in the selectable region 20 in front of the vehicle 10, a living being probability is determined, step 120, based on said road information object 16, 18.

If the road information object 16, 18 indicates a higher probability for a living being being present on the road, step 125, a higher value is determined for the living being probability. The term higher is utilized as compared to the value for the rest of that road. Then the fire interval of the evaluation algorithm is adjusted accordingly, step 130.

As mentioned above, the living being probability may be a person probability.

Step 110 may be performed continuously or intermittently. If no road information object is present in the selectable region 20 in front of the vehicle 10, the vehicle 10 returns to step 110 again.

If the road information object 16, 18 does not indicate a higher probability for a living being being present on the road, step 125, a default value of the living being probability may be used and the method may return to step 110.

The method may further comprise that it is checked, if the sensor 44 detects an impact or an imminent impact with an object. In that case, information about the impact is sent from the sensor 44 as a signal to the evaluation algorithm, step 150, which in step 160 evaluates if the signal is within the selected fire interval, and in that case activates the protection means, step 170. If not being within the fire interval in step 160, the protection means 40, 42 is not activated. The method then returns to step 110.

Since the road information object 16, 18 is detected at a distance d from the vehicle 10, there will be a time span in between the detection of the road information object 16, 18 and the possible actual impact between the vulnerable road user 22 and the vehicle 10 detected by the sensor 44. The method may thus keep checking, until the impact actually occurs, or is actually impending, and then use the evaluation algorithm for deciding about whether or not to activate the protection means 40, 42.

The remote sensor 28 or additional remote sensor of the means 46 may be used to determine the distance d to the road information object 16, 18 and thus to predict when an impact with a vulnerable road user 22 may possibly occur based on the knowledge of the distance d and the speed of the vehicle 10. If the contact-based sensor 26 does not detect an impact within a reasonable time, the system may go back to normal operation again, e.g. by using the default value of the living being probability. This may for example be due to that there was no vulnerable road user 22 on the road 10 or that the vulnerable road user 22 has moved out of the way of the vehicle 10.

The first determination unit 26 may use the information about the distance d and the speed of the vehicle 10 in order to select a suitable timing for adjusting the selectable fire interval. Alternatively, the data of the road information object 16, 18 may be sent together with data about time to predicted impact. In that case the processor 38 is able to store the data about the road information object 16, 18 at least until the time to the predicted impact has elapsed. The data transmission from the first determination unit 26 may be done periodically, e.g. once every 10-100 milliseconds.

In case an impact is detected by the sensor 44 without any previous detection of a road information object 16, 18, the fire interval of the evaluation algorithm may be set to a predefined default range, e.g. by using the default value of the living being probability.

Further modifications of the invention within the scope of the appended claims are feasible. As such, the present invention should not be considered as limited by the embodiments and figures described herein. Rather, the scope of the invention should be determined by the appended claims, with reference to the description and drawings.

## Claims

1. A method for setting a system (12) of a vehicle (10) for protection of a vulnerable road user (22), said method comprising:
a) determining a road information object (16) in a selectable region (20) in front of said vehicle (10), said road information object (16) comprising a traffic sign, said road information object (16) including a supplementary sign giving an interval in metres and/or giving information about time, and deriving information from said supplementary sign about within which distance the road information object (16) is valid and/or about during which time interval said road information object (16) is valid,
b) determining a person probability based on said road information object (16), wherein a level of said person probability is set dependent on said information derived from said road information object (16),
c) adjusting a selectable fire interval of an evaluation algorithm of said system (12) utilizing said determined person probability, said fire interval being used for activating a vulnerable road user protection means (40, 42) of said system (12).

2. The method according to any one of the preceding claims, wherein step a) is performed by scanning said region (20) in front of said vehicle (10) by means of a remote sensor (28) of said vehicle (10) in order to detect said road information object (16).

3. The method according to any one of the preceding claims, wherein step a) and/or step b) is/are performed by utilizing image analysis for determining presence of said road information object (16) and/or determining information indicated by said road information object (16).

4. The method according to any one of the preceding claims, wherein step a) and/or b) is/are performed by utilizing an infrastructure-2-vehicle system for sending information about said road information object (16) to said vehicle (10).

5. The method according to any one of the preceding claims, wherein said determined person probability is confirmed by utilizing additional information available in said vehicle (10), such as a digital map.

6. The method according to any one of the preceding claims further comprising
- determining a window (24) being defined by a time and/or a distance from a location of said determined road information object (16);
- utilizing said adjusted selectable fire interval within said window (24).

7. The method according to claim 6, wherein a size of said window (24) is selected dependent on said information derived from said road information object (16).

8. The method according to any one of the preceding claims, wherein said method further comprises:
- determining a speed of an object moving in said selectable region (20) in front of said vehicle (10),
- determining that said speed is in a speed range typical of a vulnerable road user (22),
- adjusting said person probability based on said determined speed.

9. The method according to any one of the preceding claims, wherein the method further comprises:
- detecting an impact or an imminent impact with an object by a sensor (28, 44, 46) of said vehicle (10),
- said sensor (28, 44, 46) sending information about the impact as a signal to said evaluation algorithm,
- said evaluation algorithm evaluating if said signal is within said selectable fire interval, and in that case activating said vulnerable road user protection means (40, 42) of said vehicle (10).

10. A system (12) for protection of a vulnerable road user (22), said system (12) being adapted to be used in a vehicle (10), said system (12) comprising:
- a first determination unit (26) for determining a road information object (16) in a selectable region (20) in front of said vehicle (10), said road information object (16) comprising a traffic sign,
- a second determination (30) unit for determining a person probability based on said road information object (16),
said first (26) and/or second (30) determination unit comprising an image analysis system (32), which is adapted to derive information from a supplementary sign of said road information object (16) about within which distance the road information object (16) is valid and/or about during which time interval said road information object (16) is valid,
said system (12) further comprising
- a processor (38) comprising an evaluation algorithm for activation of a vulnerable road user protection means (40, 42) of said vehicle (10), wherein a fire interval of said evaluation algorithm is selectable utilizing said determined person probability, said fire interval being used for activating said vulnerable road user protection means (40, 42) of said vehicle (10), wherein a level of said person probability is set dependent on said information derived from said road information object (16).

11. The system (12) according to claim 10 further comprising
- a sensor (28, 44, 46) for detecting an impact or an imminent impact with an object,
said sensor (28, 44, 46) being arranged to send information as a signal to said evaluation algorithm, and
- said vulnerable road user protection means (40, 42) being adapted to be activated, if said signal is evaluated as being within said selectable fire interval.

12. The system (12) according to claim 10 or 11, wherein said first determination unit (26) comprises a remote sensor (28) for detecting said road information object (16) and/or a communication unit (34) for communication with another vehicle (10) and or a traffic infrastructure unit.

## Patentansprüche

1. Verfahren zum Einstellen eines Systems (12) eines Fahrzeugs (10) zum Schutz eines gefährdeten Verkehrsteilnehmers (22), wobei das Verfahren Folgendes umfasst:
a) Bestimmen eines Straßeninformationsgegenstands (16) in einem wählbaren Bereich (20) vor dem Fahrzeug (10), wobei der Straßeninformationsgegenstand (16) ein Verkehrszeichen umfasst und der Straßeninformationsgegenstand (16) ein Zusatzzeichen enthält, das ein Intervall in Metern angibt und/oder das Informationen über eine Zeit gibt, und Ableiten von Informationen von dem Zusatzzeichen darüber, in welchem Abstand der Straßeninformationsgegenstand (16) gültig ist, und/oder darüber, während welches Zeitraums der Straßeninformationsgegenstand (16) gültig ist,
b) Bestimmen einer Personenwahrscheinlichkeit auf der Grundlage des Straßeninformationsgegenstands (16), wobei ein Pegel der Personenwahrscheinlichkeit abhängig von den Informationen, die von dem Straßeninformationsgegenstand (16) abgeleitet werden, eingestellt wird,
c) Anpassen eines wählbaren Feuerintervalls eines Auswertungsalgorithmus des Systems (12) unter Verwendung der bestimmten Personenwahrscheinlichkeit, wobei das Feuerintervall zum Aktivieren von Schutzmitteln (40, 42) für gefährdete Verkehrsteilnehmer des Systems (12) verwendet wird.

2. Verfahren nach einem der vorhergehenden Ansprüche, wobei Schritt a) durch Abtasten des Bereichs (20) vor dem Fahrzeug (10) mittels eines Fernsensors (28) des Fahrzeugs (10) durchgeführt wird, um den Straßeninformationsgegenstand (16) zu detektieren.

3. Verfahren nach einem der vorhergehenden Ansprüche, wobei Schritt a) und/oder Schritt b) unter Verwendung von Bildanalyse zum Bestimmen der Anwesenheit des Straßeninformationsgegenstands (16) und/oder Bestimmen von Informationen, die durch den Straßeninformationsgegenstand (16) angezeigt werden, durchgeführt werden.

4. Verfahren nach einem der vorhergehenden Ansprüche, wobei Schritt a) und/oder b) unter Verwendung eines Infrastruktur-zu-Fahrzeug-Systems zum Senden von Informationen über den Straßeninformationsgegenstand (16) an das Fahrzeug (10) durchgeführt werden.

5. Verfahren nach einem der vorhergehenden Ansprüche, wobei die bestimmte Personenwahrscheinlichkeit unter Verwendung zusätzlicher Informationen, die in dem Fahrzeug (10) verfügbar sind, wie z. B. einer digitalen Karte, bestätigt wird.

6. Verfahren nach einem der vorhergehenden Ansprüche, das ferner Folgendes umfasst:
- Bestimmen eines Fensters (24), das durch eine Zeit und/oder eine Entfernung von einem Standort des bestimmten Straßeninformationsgegenstands (16) definiert ist;
- Verwenden des angepassten wählbaren Feuerintervalls in dem Fenster (24).

7. Verfahren nach Anspruch 6, wobei eine Größe des Fensters (24) abhängig von den Informationen, die von dem Straßeninformationsgegenstand (16) abgeleitet werden, gewählt wird.

8. Verfahren nach einem der vorhergehenden Ansprüche, wobei das Verfahren ferner Folgendes umfasst:
- Bestimmen einer Geschwindigkeit eines Gegenstands, der sich in dem wählbaren Bereich (20) vor dem Fahrzeug (10) bewegt,
- Bestimmen, dass sich die Geschwindigkeit in einem Geschwindigkeitsbereich befindet, der für einen gefährdeten Verkehrsteilnehmer (22) typisch ist,
- Anpassen der Personenwahrscheinlichkeit auf der Grundlage der bestimmten Geschwindigkeit.

9. Verfahren nach einem der vorhergehenden Ansprüche, wobei das Verfahren ferner Folgendes umfasst:
- Detektieren eines Aufpralls oder eines drohenden Aufpralls auf einen Gegenstand durch einen Sensor (28, 44, 46) des Fahrzeugs (10),
- Senden von Informationen über den Aufprall als ein Signal an den Auswertungsalgorithmus durch den Sensor (28, 44, 46), und
- Auswerten durch den Auswertungsalgorithmus, ob das Signal in dem wählbaren Feuerintervall liegt, und wenn ja, Aktivieren der Schutzmittel (40, 42) für gefährdete Verkehrsteilnehmer des Fahrzeugs (10).

10. System (12) zum Schutz eines gefährdeten Verkehrsteilnehmers (22), wobei das System (12) ausgelegt ist, in einem Fahrzeug (10) verwendet zu werden, und das System (12) Folgendes umfasst:
- eine erste Bestimmungseinheit (26) zum Bestimmen eines Straßeninformationsgegenstands (16) in einem wählbaren Bereich (20) vor dem Fahrzeug (10), wobei der Straßeninformationsgegenstand (16) ein Verkehrszeichen umfasst,
- eine zweite Bestimmungseinheit (30) zum Bestimmen einer Personenwahrscheinlichkeit auf der Grundlage des Straßeninformationsgegenstands (16), wobei die erste (26) und/oder die zweite (30) Bestimmungseinheit ein Bildanalysesystem (32) umfasst, das ausgelegt ist, Informationen von einem Zusatzzeichen des Straßeninformationsgegenstands (16) abzuleiten, darüber, in welchem Abstand der Straßeninformationsgegenstand (16) gültig ist, und/oder darüber, während welches Zeitraums der Straßeninformationsgegenstand (16) gültig ist,
wobei das System (12) ferner Folgendes umfasst:
- einen Prozessor (38), der einen Auswertungsalgorithmus zum Aktivieren von Schutzmitteln (40, 42) für gefährdete Verkehrsteilnehmer des Fahrzeugs (10) umfasst, wobei ein Feuerintervall des Auswertungsalgorithmus unter Verwendung der bestimmten Personenwahrscheinlichkeit wählbar ist, wobei das Feuerintervall zum Aktivieren von Schutzmitteln (40, 42) für gefährdete Verkehrsteilnehmer des Fahrzeugs (10) verwendet wird, wobei ein Pegel der Personenwahrscheinlichkeit abhängig von den Informationen, die von dem Straßeninformationsgegenstand (16) abgeleitet werden, eingestellt wird.

11. System (12) nach Anspruch 10, das ferner Folgendes umfasst:
- einen Sensor (28, 44, 46) zum Detektieren eines Aufpralls oder eines drohenden Aufpralls auf einen Gegenstand,
wobei der Sensor (28, 44, 46) ausgelegt ist, Informationen als ein Signal an den Auswertungsalgorithmus zu senden, und
- die Schutzmittel (40, 42) für gefährdete Verkehrsteilnehmer ausgelegt sind, aktiviert zu werden, wenn das Signal als in dem wählbaren Feuerintervall liegend ausgewertet wird.

12. System (12) nach Anspruch 10 oder 11, wobei die erste Bestimmungseinheit (26) einen Fernsensor (28) zum Detektieren des Straßeninformationsgegenstands (16) und/oder eine Kommunikationseinheit (34) für eine Kommunikation mit einem weiteren Fahrzeug (10) und/oder einer Verkehrsinfrastruktureinheit umfasst.

## Revendications

1. Procédé de réglage d'un système (12) d'un véhicule (10) pour la protection d'un usager de la route vulnérable (22), ledit procédé comprenant les étapes suivantes :
a) détermination d'un objet d'information routière (16) dans une région sélectionnable (20) au-devant dudit véhicule (10), ledit objet d'information routière (16) comprenant un panneau indicateur de circulation, ledit objet d'information routière (16) comportant un panneau indicateur supplémentaire donnant un intervalle en mètres et/ou donnant une information sur le temps, et déduction, à partir dudit panneau indicateur supplémentaire, d'une information sur la distance de validité de l'objet d'information routière (16) et/ou sur l'intervalle de temps de validité dudit objet d'information routière (16),
b) détermination d'une probabilité d'une personne sur la base dudit objet d'information routière (16), un niveau de ladite probabilité d'une personne étant défini en fonction de ladite information déduite dudit objet d'information routière (16),
c) ajustement d'un intervalle d'amorçage sélectionnable d'un algorithme d'évaluation dudit système (12) à l'aide de ladite probabilité d'une personne déterminée, ledit intervalle d'amorçage servant à activer un moyen de protection (40, 42) d'usager de la route vulnérable dudit système (12).

2. Procédé selon l'une quelconque des revendications précédentes, dans lequel l'étape a) est mise en oeuvre par balayage de ladite région (20) au-devant dudit véhicule (10) au moyen d'un capteur à distance (28) dudit véhicule (10) dans le but de détecter ledit objet d'information routière (16).

3. Procédé selon l'une quelconque des revendications précédentes, dans lequel l'étape a) et/ou l'étape b) sont/est mises/mise en oeuvre à l'aide d'une analyse d'image permettant de déterminer la présence dudit objet d'information routière (16) et/ou de déterminer une information indiquée par ledit objet d'information routière (16).

4. Procédé selon l'une quelconque des revendications précédentes, dans lequel l'étape a) et/ou l'étape b) sont/est mises/mise en oeuvre à l'aide d'un système de type Infrastructure à Véhicule destiné à envoyer une information concernant ledit objet d'information routière (16) audit véhicule (10).

5. Procédé selon l'une quelconque des revendications précédentes, dans lequel ladite probabilité d'une personne déterminée est confirmée à l'aide d'une information additionnelle disponible dans ledit véhicule (10), telle qu'une carte numérique.

6. Procédé selon l'une quelconque des revendications précédentes, comprenant en outre les étapes suivantes :
- détermination d'une fenêtre (24) définie par un temps et/ou une distance depuis un emplacement dudit objet d'information routière (16) ;
- utilisation dudit intervalle d'amorçage sélectionnable ajusté au sein de ladite fenêtre (24).

7. Procédé selon la revendication 6, dans lequel une taille de ladite fenêtre (24) est sélectionnée en fonction de ladite information déduite dudit objet d'information routière (16).

8. Procédé selon l'une quelconque des revendications précédentes, lequel procédé comprend en outre les étapes suivantes :
- détermination d'une vitesse d'un objet se déplaçant dans ladite région sélectionnable (20) au-devant dudit véhicule (10),
- détermination que ladite vitesse s'inscrit dans une plage de vitesse caractéristique d'un usager de la route vulnérable (22),
- ajustement de ladite probabilité d'une personne sur la base de ladite vitesse déterminée.

9. Procédé selon l'une quelconque des revendications précédentes, lequel procédé comprend en outre les étapes suivantes :
- détection d'un impact ou d'un impact imminent avec un objet par un capteur (28, 44, 46) dudit véhicule (10),
- envoi, par ledit capteur (28, 44, 46), d'une information concernant l'impact sous forme d'un signal audit algorithme d'évaluation,
- évaluation, par ledit algorithme d'évaluation, si ledit signal s'inscrit dans ledit intervalle d'amorçage sélectionnable et, le cas échéant, activation, par ledit algorithme d'évaluation, dudit moyen de protection (40, 42) d'usager de la route vulnérable dudit véhicule (10).

10. Système (12) pour la protection d'un usager de la route vulnérable (22), ledit système (12) étant adapté à être utilisé dans un véhicule (10), ledit système (12) comprenant :
- une première unité de détermination (26) destinée à déterminer un objet d'information routière (16) dans une région sélectionnable (20) au-devant dudit véhicule (10), ledit objet d'information routière (16) comprenant un panneau indicateur de circulation,
- une deuxième unité de détermination (30) destinée à déterminer une probabilité d'une personne sur la base dudit objet d'information routière (16), lesdites première (26) et/ou deuxième (30) unités de détermination comprenant un système d'analyse d'image (32), lequel est adapté à déduire, à partir d'un panneau indicateur supplémentaire dudit objet d'information routière (16), une information sur la distance de validité de l'objet d'information routière (16) et/ou sur l'intervalle de temps de validité dudit objet d'information routière (16),
ledit système (12) comprenant en outre
- un processeur (38) comprenant un algorithme d'évaluation pour l'activation d'un moyen de protection (40, 42) d'usager de la route vulnérable dudit véhicule (10), un intervalle d'amorçage dudit algorithme d'évaluation étant sélectionnable à l'aide de ladite probabilité d'une personne déterminée, ledit intervalle d'amorçage servant à activer ledit moyen de protection (40, 42) d'usager de la route vulnérable dudit véhicule (10), un niveau de ladite probabilité d'une personne étant défini en fonction de ladite information déduite dudit objet d'information routière (16).

11. Système (12) selon la revendication 10, comprenant en outre :
- un capteur (28, 44, 46) destiné à détecter un impact ou un impact imminent avec un objet,
ledit capteur (28, 44, 46) étant conçu pour envoyer une information sous forme d'un signal audit algorithme d'évaluation, et
- ledit moyen de protection (40, 42) d'usager de la route vulnérable étant adapté à être activé s'il est évalué que ledit signal s'inscrit dans ledit intervalle d'amorçage sélectionnable.

12. Système (12) selon la revendication 10 ou 11, dans lequel ladite première unité de détermination (26) comprend un capteur à distance (28) destiné à détecter ledit objet d'information routière (16) et/ou une unité de communication (36) destinée à communiquer avec un autre véhicule (10) et/ou une unité d'infrastructure de circulation.
